(19) Europäisches Patentamt
European Patent Office
Office européen des brevets

(11) **EP 4 693 650 A2**

(12) **EUROPEAN PATENT APPLICATION**

(43) Date of publication:
**11.02.2026 Bulletin 2026/07**

(51) International Patent Classification (IPC):
**H01M 50/209** (2021.01)    **H01M 50/298** (2021.01)
**H01M 10/04** (2006.01)

(21) Application number: **25192851.1**

(22) Date of filing: **30.07.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.07.2024 KR 20240101837**

(71) Applicant: **SK On Co., Ltd.**
**Seoul 03161 (KR)**

(72) Inventors:
• **JANG, Sun Ho**
**34124 Daejeon (KR)**
• **PARK, Hyeon Seob**
**34124 Daejeon (KR)**

(74) Representative: **Prüfer & Partner mbB**
**Patentanwälte · Rechtsanwälte**
**Sohnckestraße 12**
**81479 München (DE)**

(54) **SUPPORT STRUCTURE AND BATTERY ASSEMBLY INCLUDING THE SAME**

(57)    End plates and battery assemblies including the same are discloses. **In** an embodiment, an end plate comprises a main body portion including a first surface having a planar shape, a second surface having a curved shape and disposed to face away from the first surface, and a first connection surface and a second connection surface, each of the first connection surface and the second connection surface disposed to connect the first surface to the second surface and face away from each other; and a recess portion including a recess space recessed from the second surface toward the first surface, and extending from the first connection surface toward the second connection surface.

FIG. 1

EP 4 693 650 A2

**Description**

BACKGROUND OF THE INVENTION

1. Field

The disclosed technology relates to a support structure and a battery assembly including the same. More specifically, the disclosed technology relates to an end plate and a battery assembly including the same.

2. Description of the Related Art

Battery modules may be manufactured by stacking a predetermined number of grouped battery cells, placing support structures such as end plates on two opposite sides of the stacked battery cells, and then securing the stacked battery cells and the end plates with steel bands.

The support structures such as end plates serve not only to structurally secure the battery module, but also to suppress swelling of the stacked battery cells. Specifically, the end plates may apply consistent pressure to the stacked battery cells.

SUMMARY OF THE INVENTION

The disclosed technology can be implemented in some embodiments to provide an end plate that can apply uniform pressure to a battery cell.

The disclosed technology can be implemented in some embodiments to provide an end plate having sufficient mechanical strength or stiffness to suppress swelling of a battery cell.

The disclosed technology can be implemented in some embodiments to reduce the overall volume of the battery assembly.

The disclosed technology can be implemented in some embodiments to reduce the weight of the battery assembly.

The disclosed technology can be implemented in some embodiments to efficiently utilize a limited space of the battery assembly.

The disclosed technology may be widely applied in the field of green technology such as electric vehicles, battery charging stations, energy storage systems (ESS), and other battery-based photovoltaics and wind power. In addition, the battery inspection apparatus based on some embodiments of the disclosed technology may be used for eco-friendly mobility applications, including electric vehicles and hybrid vehicles, to help mitigate climate change by reducing air pollution and greenhouse gas emissions.

As explained above, support structures in a battery module, such as end plates, can be designed and structured to structurally secure the battery module and suppress swelling of battery cells in the battery module. In this regard, the end plates may be formed of a metal material having a predetermined thickness, which significantly impacts both the overall volume of the battery module and the manufacturing cost of the battery module.

In address these issues, an end plate based on some embodiments of the disclose technology may comprise: a main body portion including a first surface having a planar shape, a second surface having a curved shape and disposed to face away from the first surface, and a first connection surface and a second connection surface, each of the first connection surface and the second connection surface disposed to connect the first surface and the second surface and face away from each other; and a recess portion including a recess space recessed from the second surface toward the first surface (e.g., the recess space may be formed by removing at least a part of the second surface), the recess portion extending from the first connection surface toward the second connection surface.

In an embodiment, the recess portion may include: a bottom region arranged in parallel with the first surface in a direction from the first connection surface toward the second connection surface; and an inclined region inclined toward the bottom region with the bottom region interposed therebetween.

In an embodiment, the end plate based on some embodiments of the disclosed technology may further comprise a first extension surface and a second extension surface extending from the first surface toward the second surface, and connected to the first surface, the second surface, the first connection surface, and the second connection surface.

In an embodiment, the second surface may include: a first protrusion region disposed at an interface between the second surface and the first extension surface (e.g., the second surface and the first extension surface meet at the first protrusion region); and a second protrusion region disposed at an interface between the second surface and the second extension surface (e.g., the second surface and the second extension surface meet at the second protrusion region), wherein a maximum thickness of thicknesses between the first surface and the second surface is formed in the first protrusion region and the second protrusion region.

In an embodiment, the end plate may further include a through-hole penetrating the main body portion in a direction from the first connection surface toward the second connection surface.

In an embodiment, the end plate may further include a plurality of through-holes penetrating the main body portion in a direction from the first connection surface toward the second connection surface, wherein the through-holes are arranged in parallel with the first surface at predetermined intervals.

In an embodiment, the recess portion may include: a bottom region arranged in parallel with the first surface and extending in a direction from the first connection surface toward the second connection surface; and inclined regions inclined toward the bottom region with the bottom region interposed therebetween; wherein the bottom region is located between two adjacent through-holes among the plurality of through-holes. In an embodiment, the end plate may be defined by Formula 1 below:

[Formula 1]

$$0 < \frac{|M - M0|}{M0} * 100 \leq 22.5$$

In Formula 1, M may be a mass of an end plate including the recess portion forming the recess space, and M0 may be a mass of the end plate filled with the same material as the main body portion in the recess space.

In an embodiment, the recess portion may include: a first recess portion including a part of the second surface recessed toward the first surface to form a first recess space, and extending in a direction from the first connection surface toward the second connection surface; and a second recess portion including another portion of the second surface recessed toward the first surface to form a second recess space, and extending in a direction from the first connection surface toward the second connection surface.

In an embodiment, a battery assembly may comprise: a plurality of battery cells arranged along predetermined stacking direction; a first end plate and a second end plate disposed outside the plurality of battery cells along the stacking direction; and a band portion surrounding the plurality of battery cells and the first end plate and the second end plate.

In an embodiment, each of the first end plate and the second end plate may comprise a main body portion including a first surface having a planar shape extending along the stacking direction, a second surface having a curved shape and disposed to face away from the first surface, and a first connection surface and a second connection surface, each of the first connection surface and the second connection surface disposed to connect the first surface to the second surface and are face away from each other; and a recess portion including a recess space recessed from the second surface toward the plurality of battery cells (e.g., the recess space may be formed by removing at least a part of the second surface), the recess portion extending from the first connection surface toward the second connection surface.

In an embodiment, the recess portion may include: a bottom region arranged in parallel with the first surface in a direction from the first connection surface toward the second connection surface, the bottom region being in contact with the band portion; and inclined regions inclined toward the bottom region with the bottom region interposed therebetween.

In an embodiment, the battery assembly may further include a first extension surface and a second extension surface extending from the first surface toward the second surface, and connected to the first surface, the second surface, the first connection surface, and the second connection surface; wherein the second surface includes: a first protrusion region disposed at an interface between the second surface and the first extension surface (e.g., the second surface and the first extension surface meet at the first protrusion region); and a second protrusion region disposed at an interface between the second surface and the second extension surface (e.g., the second surface and the second extension surface meet at the second protrusion region), wherein a maximum thickness of thicknesses between the first surface and the second surface is formed in the first protrusion region and the second protrusion region.

In an embodiment, each of the first end plate and the second end plate may include a through-hole that penetrates the main body portion in a direction from the first connection surface toward the second connection surface.

In an embodiment, each of the first end plate and the second end plate includes a plurality of through-holes penetrating the main body portion in a direction from the first connection surface toward the second connection surface, wherein the through-holes are arranged in parallel with the first surface at predetermined intervals.

In an embodiment, the recess portion may include: a bottom region arranged in parallel with the first surface and extending from the first connection surface toward the second connection surface; and inclined regions inclined toward the bottom region with the bottom region interposed therebetween, wherein the bottom region is located between two adjacent through-holes among the plurality of through-holes.

In an embodiment, the battery assembly may be defined by Formula 1 below:

[Formula 1]

$$0 < \frac{|M - MO|}{MO} * 100 \leq 22.5$$

In Formula 1, M may be a mass of an end plate including the recess portion forming the recess space, and M0 may be a mass of the end plate filled with the same material as the main body portion in the recess space.

In an embodiment, the recess portion may include: a first recess portion including a part of the second surface recessed toward the first surface to form a first recess space, and extending in a direction from the first connection surface toward the second connection surface; and a second recess portion including another portion of the second surface recessed toward the first surface to form a second recess space, and extending in a direction from the first connection surface toward the second connection surface.

In an embodiment, the band portion may include: a first band portion in contact with the first recess portion; and a second band portion arranged adjacent to the first band portion and in contact with the second recess portion.

BRIEF DESCRIPTION OF THE DRAWINGS

FIG. 1 illustrates an example of a battery assembly based on some embodiments of the disclosed technology.

FIG. 2 illustrates another example of a battery assembly based on some embodiments of the disclosed technology.

FIG. 3 illustrates an example of an end plate based on some embodiments of the disclosed technology.

FIG. 4 illustrates one surface of an end plate perpendicular to the direction in which the through-hole extends, based on some embodiments of the disclosed technology.

FIG. 5 illustrates an example of an end plate deformed due to swelling of a battery cell, based on some embodiments of the disclosed technology.

FIG. 6 shows the reduction in the stiffness of an end plate corresponding to the reduction in the mass of the end plate.

FIG. 7 illustrates another example of an end plate based on some embodiments of the disclosed technology.

DETAILED DESCRIPTION

Hereinafter, example embodiments of the disclosed technology will be described in detail with reference to the accompanying drawings. The embodiments described below are provided by way of example only and are not intended to limit the scope of the disclosed technology to the specific embodiments.

In some embodiments, the terms "battery," "battery cell," and "secondary battery" may refer to a battery, battery cell, and secondary battery capable of charging and discharging multiple times.

In some embodiments, the term "battery assembly" may refer to any one of a battery module, a battery pack, and an energy storage system (ESS) in which a plurality of battery cells are grouped.

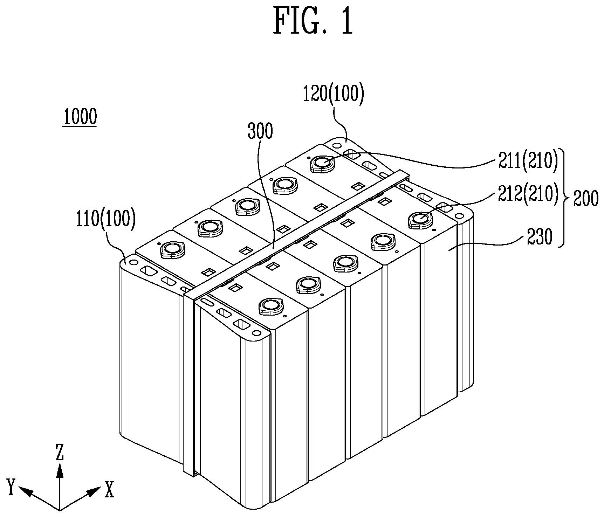

FIG. 1 illustrates an example of a battery assembly based on some embodiments of the disclosed technology.

The battery assembly 1000 based on some embodiments of the disclosed technology may include a plurality of battery cells 200 disposed along a predetermined stacking direction, a first end plate 110 and a second end plate 120 disposed outside the plurality of battery cells 200 along the stacking direction, and a band portion 300 surrounding the plurality of battery cell 200, the first end plate 110, and the second end plate 120.

Referring to FIG. 1, the plurality of battery cells 200 may each include a cell case 230 accommodating an electrode assembly (not shown) therein, and a terminal portion 210 electrically connected to the electrode assembly and protruding outward of the cell case 230.

In some implementations, the cell case 230 may include metal.

The terminal portion 210 may include a first terminal portion 211 having one polarity, either as a positive electrode or a negative electrode, and a second terminal portion 212 having the opposite polarity.

Although FIG. 1 illustrates a case where the plurality of battery cells 200 have a rectangular shape, the plurality of battery cell 200 may have another shape such as pouch shape. In addition, the stacked number of the plurality of battery cells 200 may vary depending on the design.

In addition, the battery assembly 1000 may include a plurality of battery groups including the plurality of battery cells 200, the end plate 100 disposed outside the plurality of battery cells 200, and the band portion 300 that integrally binds the plurality of battery cells 200 and the end plate 100.

The end plate 100 may be provided on the outermost side of the plurality of battery cells 200 along the stacking direction. More specifically, the end plate 100 may include a first end plate 110 and a second end plate 120 disposed on two opposite sides of the plurality of battery cells 200 along the stacking direction.

The band portion 300 may surround the plurality of battery cells 200 and the end plate 100, allowing the end plate 100 to apply uniform pressure to the plurality of battery cell 200 in order to suppress swelling of the plurality of battery cells 200. The material of the band portion 300 may be a metallic material.

Referring to FIG. 1, the band portion 300 may surround the plurality of battery cells 200, the first end plate 110, and the second end plate 120 along the Z direction and the X direction. In addition, the first end plate 110 and the second end plate 120 may have a recessed shape in the area where they meet the band portion 300.

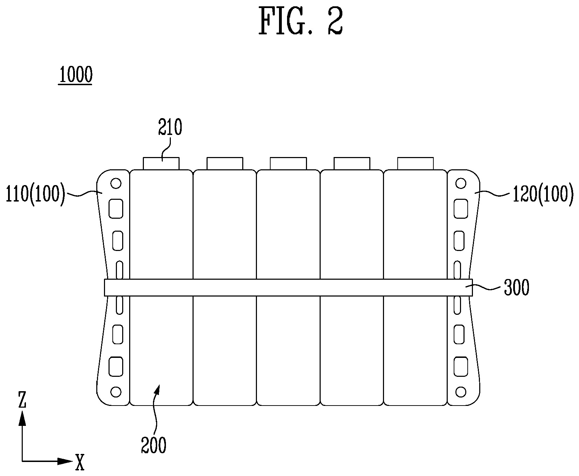

FIG. 2 illustrates another example of a battery assembly based on some embodiments of the disclosed technology.

Unlike FIG. 1, FIG. 2 shows an example in which the band portion 300 surrounds the plurality of battery cells 200 and the end plate 100 along the X direction and the Y direction.

Similarly, the first end plate 110 and the second end plate 120 may have a recessed shape in the area where they meet the band portion 300.

Unlike FIG. 1, since the band portion 300 is located at a predetermined height of the plurality of battery cells 200, the recess portions of the first end plate 110 and the second end plate 120 may be arranged parallel to the band portion 300.

The description of the end plate 100 in some embodiments may be equally applied to the first end plate 110 and the second end plate 120. The first end plate 110 and the second end plate 120 have the same function, differing only in the shape and position due to their symmetrical design. Therefore, unless otherwise specified, the description of the first end plate 110 may be applied to the second end plates 120.

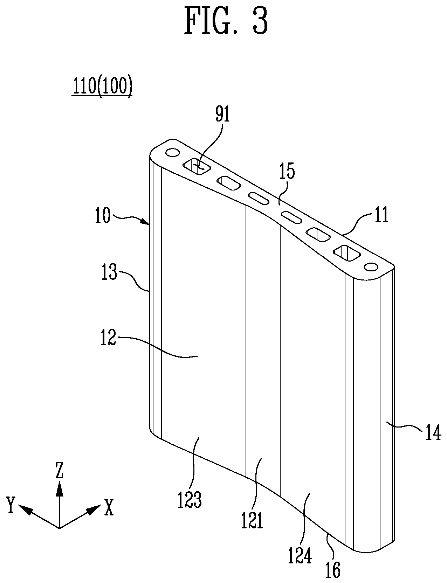

FIG. 3 illustrates an example of an end plate based on some embodiments of the disclosed technology.

The end plate 100 based on some embodiments of the disclosed technology may include a main body portion 10 including a first surface 11 having a planar shape, a second surface 12 opposing the first surface 11 and having a curved surface shape to be concave towards the first surface 11, and a first connection surface 15 and a second connection surface 16 connecting the first surface 11 and the second surface 12, facing each other, and arranged side by side, and a recess 121 extending in a direction from the first connection surface 15 toward the second connection surface 16. Under this design, the second, curved surface 12 that is concave towards the first surface 11 forms a recess space 129 recessed from the second surface 12 toward the first surface 11 and this recess space 129 may be formed by removing at least a part of the material from the second surface 12.

The main body portion 10 may form an outer shape of the end plate 100. That is, the main body portion 10 may have a plate shape, and at least one surface may have a curved shape.

The main body portion 10 may be made of metal. Specifically, the material of the main body portion 10 may be, but is not limited to, steel or aluminum.

The first surface 11 and the second surface 12 may be located opposite to each other in the main body portion 10. The first surface 11 and the second surface 12 may overlap in the same shape when orthographically projected from the first surface 11 along the second surface 12, but since the first surface 11 has a planar shape and the second surface 12 has a curved shape that is concave towards the first surface 11, the area of the second surface 12 can be larger than the area of the first surface 11.

The first connection surface 15 and the second connection surface 16 may be provided in a planar shape so that the end plate 100 for battery cells can stand on another structure or the ground.

The end plate 100 based on some embodiments of the disclosed technology may further include a through-hole 91 penetrating the main body portion 10 in a direction from the first connection surface 15 to the second connection surface 16.

The through-hole 91, being hollow by removing the material of the end plate 100, may contribute to reducing the mass of the main body portion 10 by an amount corresponding to the weight of the material that would otherwise occupy the through-hole 91. In addition, from the perspective of material mechanics, the presence of the through-hole 91 allows the main body portion 10 to better withstand external pressure compared to the same end plate 100 that is solid without the through-hole 91.

The plurality of such through-holes 91 may be implemented in the end plate 10 as parallel through holes with the first surface 11 and such through-holes 91 are spaced from one another at predetermined intervals. Having multiple through-holes 91 can further reduce the total mass or weight of the end plate 10 and improves the mechanical strength of the end plate 10 against the external pressure applied to the end plate 10.

The recess portion 121 may be formed by recessing the first surface 11 toward the second surface 12. That is, the recess portion 121 may include a bottom region 1211 arranged in parallel with the first surface 11 in a direction from the first connection surface 15 toward the second connection surface 16, and inclined regions 123 and 124 inclined toward the bottom region 1211 with the bottom region 1211 interposed therebetween.

The recess space 129 may be formed by the inclined regions 123, 124 and the bottom region 1211. The recess space 129 may extend from the first connection surface 15 towards the second connection surface 16.

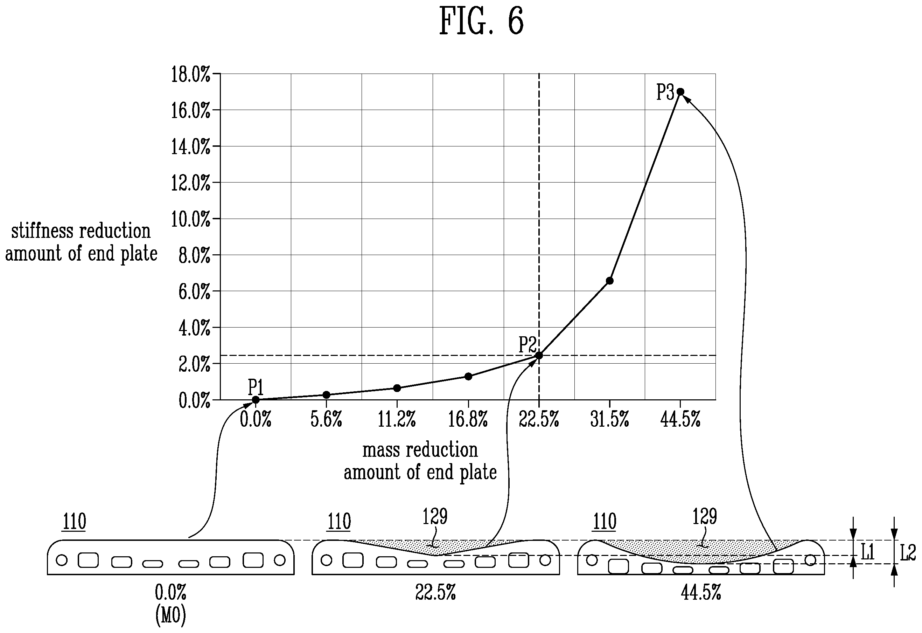

The end plate 100 based on some embodiments of the disclosed technology may be reduced in mass (or weight) and volume by the recess space 129 in the main body portion 10. Since one of the functions of the end plate 100 is to suppress the swelling of the battery cell 200, even if the mass of the end plate 100 is reduced by the recess space 129 the mechanical stiffness of the end plate 100 may remain largely unchanged even when the recess space 129 is present, as shown in FIG. 6.

In addition, since the volume of the end plate 100 may be reduced by the recess space 129, the battery assembly 1000 including the end plate 100 may utilize space more efficiently. In an embodiment, the battery assembly 1000 using the end plate 100 may be suitable for a Cell To Pack (CTP) structure.

Considering that the material of the main body portion 10 is a metal material, the material cost may be reduced proportionally to the volume of the recess space 129.

The inclined regions 123, 124 may include a first inclined region 123 and a second inclined region 124 with the bottom region 1211 interposed therebetween. That is, the first inclined region 123 and the second inclined region 124 may be provided to be inclined toward the bottom region 1211.

In addition, the end plate 100 based on some embodiments of the disclosed technology may further include a first extension surface 13 and a second extension surface 14 extending from the first surface 11 toward the second surface 12, and connected to the first surface 11, the second surface 12, the first connection surface 15, and the second connection surface 16.

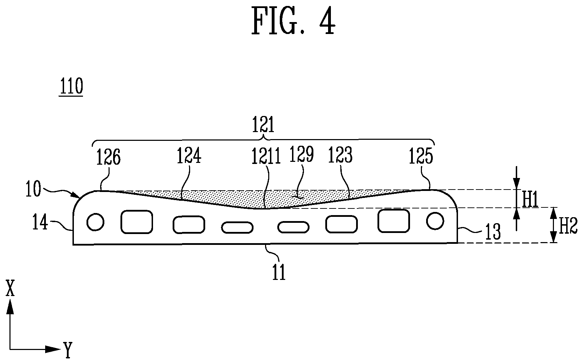

FIG. 4 illustrates one surface of an end plate perpendicular to the direction in which the through-hole extends, based on some embodiments of the disclosed technology.

Referring to FIGS. 3 and 4, the end plate 100 based on some embodiments of the disclosed technology may further include a first extension surface 13 and a second extension surface 14 that extend from the first surface 11 toward the second surface 12, and are connected to the first surface 11, the second surface 12, the first connection surface 15, and the second connection surface 16. The second surface 12 includes a first protrusion region 125 where the second surface 12 and the first extension surface 13 meet, and a second protrusion region 126 where the second surface 12 and the second extension surface 14 meet, and a maximum thickness of thicknesses between the first surface 11 and the second surface 12 may be formed in the first protrusion region 125 and the second protrusion region 166.

The first protrusion region 125 and the first inclined region 123 may be located between the bottom region 1211 and the first connection surface 15 on the second surface 12. In addition, the second protrusion region 126 and the second inclined region 124 may be located on the second surface 12 between the bottom region 1211 and the second connection surface 16.

That is, referring to FIG. 4, if the first protrusion region 125 and the second protrusion region 126 correspond to crests, the bottom region 1211 may correspond to a trough. Therefore, the length from the first surface 11 to the first protrusion region 125 may be longer than the length from the second surface 11 to the bottom region 1211.

The recess portion 121 includes a bottom region 1211 arranged parallel to the first surface 11 in a direction from the first connection surface 15 toward the second connection surface 16, and inclined regions 123 and 124 inclined toward the bottom region 1211 with the bottom region 1211 interposed therebetween, and the bottom region 1211 may be located between two adjacent through-holes 91 among the plurality of through-holes 91. This is because the thickness from the first surface 11 to the bottom region 1211 is the smallest, which may result in structural fragility.

In addition, considering the mechanical stiffness of the end plate 100, the length H1 from the first protrusion region 125 or the second protrusion region to the bottom region 1211 may be smaller than the length H2 from the bottom region 1211 to the first surface 11.

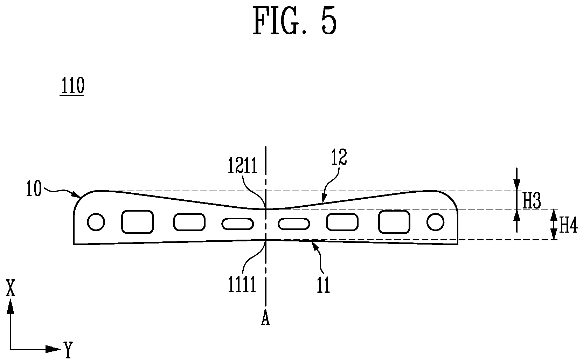

FIG. 5 illustrates an example of an end plate deformed due to swelling of a battery cell, based on some embodiments of the disclosed technology.

Referring to FIGS. 1 and 5, the plurality of battery cells 200 may be swollen along the stacking direction. Therefore, the pressure due to the swelling of the plurality of battery cells 200 may be transmitted to the first end plate 110 and the second end plate 120.

Since the plurality of battery cells 200, the first end plate 110, and the second end plate 120 are bound by the band portion 300, the first end plate 110 and the second end plate 120 may transmit an external force applied by the band portion 200 to the plurality of battery cell 200 to suppress the swelling.

In addition, since the first surfaces of the first end plate 110 and the second end plate 120 are provided in a planar shape to pressurize the plurality of battery cells 200, the first end plate 100 and the second end plate 120 may pressurize the battery cells 200 at a uniform pressure.

FIG. 5 shows an example of the end plate 100 deformed by the pressure applied to the end plate 100 when swelling occurs in the battery cell 200. FIG. 5 is exaggerated for understanding as a result of the simulation.

Referring to FIG. 5, when the battery cell 200 is swelling, the end plate 100 may be deformed. It can be seen that, in the deformation of the end plate 100, the largest deformation is made between the bottom region 1211 and the opposite region 1111 opposite to the bottom region 1211. That is, the portion that passes through the center A between the first extension surface 13 and the second extension surface 14 can be deformed the most.

Due to the deformation, the length H4 between the opposite region 1111 and the bottom region 1211 may be smaller than the length H2 between the bottom regions 1211 and the first surface 11 before the deformation (see FIG. 4).

In addition, a length H1 from the first protrusion region 125 or the second protrusion region 126 to the bottom region 1211 after the deformation may be smaller than a length H2 from the bottom region 1211 to the first surface 11 (see FIG. 4) before the deformation.

FIG. 6 shows the stiffness reduction amount of end plate (e.g., the reduction in the stiffness of an end plate) corresponding to the mass reduction amount of the end plate (e.g., the reduction in the mass of the end plate). More specifically, FIG. 6 shows a simulation experiment value for setting the size of the recess space 129. More specifically, the X-axis may represent the mass reduction amount of the end plate 100 due to the change in the volume of the recess space 129, and the Y-axis may represent the stiffness reduction amount of the end plate 100 when a plurality of battery cells 200 are swollen.

The mass reduction amount of the end plate can be defined by equation 1 below.

[Equation 1]

$$mass\ reduction\ amount = \frac{|M - M0|}{M0} * 100$$

In equation 1, M may be the mass of the end plate 100 including the recess portion 121 forming the recess space 129, and M0 may be the mass of the end plate 100 filled with the same material as the main body portion 10 in the recess space.

More specifically, M0 may refer to the mass of the end plate 100 in a rectangular shape in which the recess space 129 is not formed. In other words, the second surface 12 has no recess portion 121, and both the first surface 11 and the second surface 12 have parallel planar shapes. In contrast, M may refer to the mass of the end plate 100 having a recess shape, such as the end plate 100 based on some embodiments of the disclosed technology.

Referring to Equation 1 above, an increase in the volume of the recess space 129 may mean a decrease in the length from the first surface 11 to the bottom region 1211, which may mean a decrease in the mass of the main body portion 10 corresponding to the volume of the recess space 129.

The stiffness reduction amount of end plate may be defined by the equation 2 below.

[Equation 2]

$$stiffness\ reduction\ amount = \frac{|E - E0|}{E0} * 100$$

In equation 2, E may be the mechanical stiffness that the end plate 100 including the recess portion 121 forming the recess space 129 may have, and E0 may be the mechanical rigidness that the end plate 100 in which the recess 129 is filled with the same material as the main body portion 10 may have.

That is, the stiffness reduction amount may refer to the amount of decrease of stiffness that the end plate 100 can exhibit as the amount of mass decrease increases based on the initial rigidity (when the mass reduction amount of the end plate is 0%) as 100%.

Referring to FIG. 6, it can be seen that as the mass reduction amount of the end plate 100 increases, the stiffness reduction amount of the end plate 100 increases.

Specifically, P1 denotes a reference value at which the volume of the recess space 129 is 0, and P2 and P3 denote two cases at which the volumes of the recess spaces 129 are different. It can be seen that the volume of the recess space 129 in P2 is smaller than that of the recess spaces 129 in P3, so that the length L1 from the first protrusion region 125 or the second protrusion region 126 to the bottom region 1211 in P2 is less than the length L2 from the first protrusion regions 125 or the second protruded regions 126 to the floor region 1211 in p3.

P1 is the case where the volume of the recess space 129 is 0 or there is no recess space 129. Therefore, since the mass and stiffness of the end plate 100 in P1 correspond to M0 and E0, it can be seen that there is no decrease in mass and stiffness. P2 is a point indicating the stiffness reduction amount of the end plate 100 when the mass reduction amount of the end plate 100 is 22.5%. It can be seen from P2 that the stiffness reduction amount of the end plate 100 is not large. On the other hand, P3 represents the stiffness reduction amount of the end plate 100 when the mass reduction amount in the end plate 100 is 45%. Unlike P2, it can be seen that P3 shows a significant stiffness reduction amount of the end plate 100.

Therefore, the end plate 100 based on some embodiments of the disclosed technology may be defined by the following Formula 1.

[Formula 1]

$$0 < \frac{|M-MO|}{MO} * 100 \leq 22.5$$

That is, the mass reduction amount of the end plate 100 based on some embodiments of the disclosed technology may be greater than 0 and less than or equal to 22.5%.

Simulation Experiment Method

The graph shown in FIG. 6 shows the results of the simulation experiment. More specifically, after the rectangular LFP battery cells and the buffer pads are alternately arranged along the stacking direction, the end plate is brought into contact with one surface of the rectangular LFP battery cells in the stacking direction. The simulation results are based on the assumption that swelling occurs in the rectangular LFP cells.

The material of the end plate is assumed to be AL6063T5 (aluminum alloy containing up to 97.5% aluminum by weight).

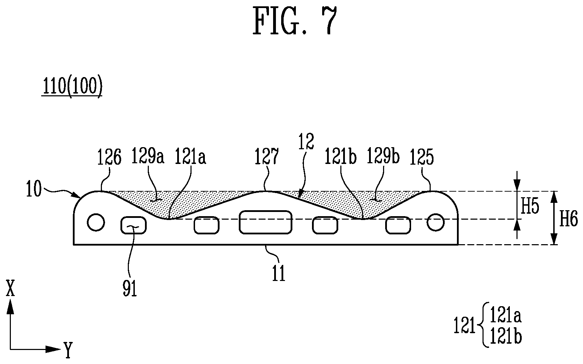

FIG. 7 illustrates another example of an end plate based on some embodiments of the disclosed technology.

Referring to FIG. 7, the recess 121 may include a first recess 121a formed by recessing a part of the second surface 12 toward the first surface 11, and extending in a direction from the first connection surface 15 toward the second connection surface 16, and a second recess 121b formed by recessing another part of the second surfaces 12 toward the first surfaces 11, and extending from the first connection surfaces 15 toward the second connection surfaces 16.

That is, unlike the embodiment of the end plate 100 described in FIGS. 1 to 6, the end plate 100 shown in FIG. 7 may include three crests and two troughs.

Accordingly, the second surface 12 may further include a third protrusion region 127 between the first protrusion region 125 and the second protrusion region 126.

That is, the plurality of depressions 121 may be formed on the second surface 12. The greater the number of recess portions 121, the more the thickness of the end plate 100 can be reduced in the direction from the first surface 11 to the second surface 12. This is because the mechanical rigidity of the end plate 100 increases as the number of the recess portions 121 increases.

Therefore, even when the length H6 from the first protrusion region 125, the second protrusion region 126, or the third protrusion region 127 to the first surface 11 is the same as the length H1+H2 from the first protrusion regions 125 or the second protrusion regions 126 to the first surface 11 of the first end plates 110 shown in FIG. 4, the length H5 from the first protruding regions 125, the second protruded regions 126 or the third protruded regions 127 to the bottom regions of the first recess portions 121a or the second recess portions 122b may be longer than the length H1 from the first protruding domains 125 or the second protruded domains 126 to the floor domains 1211 of the first end plates 110 illustrated in FIG. 4.

The main body portion 10 may include a through-hole 91 penetrating along the main body portion 10 along the second connection surface 16 from the first connection surface 15.

On the other hand, the band portion 300 may include a first band portion (not shown) in contact with the first recess portion 121a, and a second band portion (not showed) disposed in parallel with the first band portion and in contact with the second recess portion 121b.

Some of the aspects of the present disclosure are as follows:

Aspect 1: An end plate 100, comprising: a main body portion 10 including: a first surface 11 having a planar shape; a second surface 12 having a curved shape and disposed to face away from the first surface; and a first connection surface 15 and a second connection surface 16, each of the first connection surface and the second connection surface disposed to connect the first surface to the second surface and face away from each other; and a recess portion 121 including a recess space 129 recessed from the second surface toward the first surface, the recess portion extending from the first connection surface toward the second connection surface.

Aspect 2: The end plate according to aspect 1, wherein the recess portion includes: a bottom region 1211 arranged in parallel with the first surface in a direction from the first connection surface toward the second connection surface; and inclined regions 123, 124 inclined toward the bottom region with the bottom region interposed therebetween.

Aspect 3: The end plate according to any one of the preceding aspects, wherein further comprising a first extension surface 13 and a second extension surface 14 extending from the first surface toward the second surface, and connected to the first surface, the second surface, the first connection surface, and the second connection surface; wherein the second surface includes: a first protrusion region 125 disposed at an interface between the second surface and the first extension surface; and a second protrusion region 126 disposed at an interface between the second surface and the second extension surface; wherein a maximum thickness of thicknesses between the first surface and the second surface is formed in the first protrusion region and the second protrusion region.

Aspect 4: The end plate according to aspect 1, further comprising: a plurality of through-holes penetrating the main body portion in a direction from the first connection surface toward the second connection surface, wherein the through-holes are arranged in parallel with the first surface at predetermined intervals.

Aspect 5: The end plate according to aspect 4, wherein the recess portion includes: a bottom region 1211 arranged in parallel with the first surface and extending from the first connection surface toward the second connection surface; and inclined regions 123, 124 inclined toward the bottom region with the bottom region interposed therebetween; wherein the bottom region is located between two adjacent through-holes among the plurality of through-holes.

Aspect 6: The end plate according to any one of the preceding claims, wherein the end plate satisfies Formula 1 below:

[Formula 1]

$$0 < \frac{|M - MO|}{MO} * 100 \leq 22.5$$

In Formula 1, M is a mass of the end plate including the recess portion forming the recess space, and M0 is a mass of the end plate filled with the same material as the main body portion in the recess space.

Aspect 7: The end plate according to any one of the preceding aspects, wherein the recess portion includes: a first recess portion 121a including a part of the second surface recessed toward the first surface to form a first recess space, and extending in a direction from the first connection surface toward the second connection surface; and a second recess portion 121b including another portion of the second surface recessed toward the first surface to form a second recess space, and extending in a direction from the first connection surface toward the second connection surface.

Aspect 8: A battery assembly 1000, comprising: a plurality of battery cells 200 arranged along a predetermined stacking direction; a first end plate 110 and a second end plate 120 disposed outside the plurality of battery cells along the stacking direction; and a band portion 300 surrounding the plurality of battery cells and the first end plate and the second end plate; each of the first end plate and the second end plate comprising: a main body portion including: a first surface 11 having a planar shape extending along the stacking direction; a second surface 12 having a curved shape and disposed to face away from the first surface; and a first connection surface 15 and a second connection surface 16, each of the first connection surface and the second connection surface disposed to connect the first surface to the second surface and face away from each other; and a recess portion 121 including a recess space 129 recessed from the second surface toward the plurality of battery cells, the recess portion extending from the first connection surface toward the second connection surface.

Aspect 9: The battery assembly according to aspect 8, wherein the recess portion includes: a bottom region 1211 arranged in parallel with the first surface in a direction from the first connection surface toward the second connection surface, the bottom region being in contact with the band portion; and inclined regions 123, 124 inclined toward the bottom region with the bottom region interposed therebetween.

Aspect 10: The battery assembly according to aspect 8 or 9, wherein further comprising a first extension surface 13 and a second extension surface 14 extending from the first surface toward the second surface, and connected to the first surface, the second surface, the first connection surface, and the second connection surface; wherein the second surface includes: a first protrusion region 125 disposed at an interface between the second surface and the first extension surface; and a second protrusion region 126 disposed at an interface between the second surface and the second extension surface; wherein a maximum thickness of thicknesses between the first surface and the second surface is formed in the first protrusion region and the second protrusion region.

Aspect 11: The battery assembly according to aspect 8, wherein each of the first end plate and the second end plate includes: a plurality of through-holes penetrating the main body portion in a direction from the first connection surface toward the second connection surface, wherein the through-holes are arranged in parallel with the first surface at predetermined intervals.

Aspect 12: The battery assembly according to aspect 11, wherein the recess portion includes: a bottom region 1211 arranged in parallel with the first surface and extending from the first connection surface toward the second connection surface; and inclined regions 123, 124 inclined toward the bottom region with the bottom region interposed therebetween; wherein the bottom region is located between two adjacent through-holes among the plurality of through-holes.

Aspect 13: The battery assembly according to any one of claims 8 to 12, wherein the end plate satisfies Formula 1 below:

[Formula 1]

$$0 < \frac{|M - MO|}{MO} * 100 \leq 22.5$$

In Formula 1, M is a mass of the end plate including the recess portion forming the recess space, and M0 is a mass of the end plate filled with the same material as the main body portion in the recess space.

Aspect 14: The battery assembly according to aspect 8, wherein the recess portion: a first recess portion 121a including a part of the second surface recessed toward the first surface to form a first recess space 129a, and extending in a direction from the first connection surface toward the second connection surface; and a second recess portion 121b including another portion of the second surface recessed toward the first surface to form a second recess space 129b, and extending in a direction from the first connection surface toward the second connection surface.

Aspect 15: The battery assembly according to aspect 14, wherein the band portion includes: a first band portion in contact with the first recess portion; and a second band portion disposed adjacent to the first band portion and in contact with the second recess portion.

In an embodiment of the disclosed technology, an end plate can apply uniform pressure to a battery cell.

In another embodiment of the disclosed technology, an end plate can exhibit mechanical stiffness sufficient to suppress swelling of a battery cell.

In another embodiment of the disclosed technology, the volume of the battery assembly can be reduced.

In another embodiment of the disclosed technology, the weight of the battery assembly can be reduced.

Only specific examples of implementations of certain embodiments are described. Variations, improvements and enhancements of the disclosed embodiments and other embodiments may be made based on the disclosure of this patent document.

**Claims**

1. An end plate (100), comprising:

   a main body portion (10) including:

   a first surface (11) having a planar shape;
   a second surface (12) having a curved shape and disposed to face away from the first surface; and
   a first connection surface (15) and a second connection surface (16), each of the first connection surface and the second connection surface disposed to connect the first surface to the second surface and face away from each other; and

   a recess portion (121) including a recess space (129) recessed from the second surface toward the first surface, the recess portion extending from the first connection surface toward the second connection surface.

2. The end plate according to claim 1, wherein the recess portion includes:

   a bottom region (1211) arranged in parallel with the first surface in a direction from the first connection surface toward the second connection surface; and
   inclined regions (123, 124) inclined toward the bottom region with the bottom region interposed therebetween.

3. The end plate according to any one of the preceding claims, wherein further comprising a first extension surface (13) and a second extension surface (14) extending from the first surface toward the second surface, and connected to the first surface, the second surface, the first connection surface, and the second connection surface;
   wherein the second surface includes:

   a first protrusion region (125) disposed at an interface between the second surface and the first extension surface; and
   a second protrusion region (126) disposed at an interface between the second surface and the second extension surface;
   wherein a maximum thickness of thicknesses between the first surface and the second surface is formed in the first protrusion region and the second protrusion region.

4. The end plate according to claim 1, further comprising:

a plurality of through-holes penetrating the main body portion in a direction from the first connection surface toward the second connection surface,
wherein the through-holes are arranged in parallel with the first surface at predetermined intervals.

5. The end plate according to claim 4, wherein the recess portion includes:

a bottom region (1211) arranged in parallel with the first surface and extending from the first connection surface toward the second connection surface; and
inclined regions (123, 124) inclined toward the bottom region with the bottom region interposed therebetween;
wherein the bottom region is located between two adjacent through-holes among the plurality of through-holes.

6. The end plate according to any one of the preceding claims, wherein the end plate satisfies Formula 1 below:

[Formula 1]

$$0 < \frac{|M - MO|}{MO} * 100 \leq 22.5$$

In Formula 1, M is a mass of the end plate including the recess portion forming the recess space, and M0 is a mass of the end plate filled with the same material as the main body portion in the recess space.

7. The end plate according to any one of the preceding claims, wherein the recess portion includes:

a first recess portion (121a) including a part of the second surface recessed toward the first surface to form a first recess space, and extending in a direction from the first connection surface toward the second connection surface; and
a second recess portion (121b) including another portion of the second surface recessed toward the first surface to form a second recess space, and extending in a direction from the first connection surface toward the second connection surface.

8. A battery assembly (1000), comprising:

a plurality of battery cells (200) arranged along a predetermined stacking direction;
a first end plate (110) and a second end plate (120) disposed outside the plurality of battery cells along the stacking direction; and
a band portion (300) surrounding the plurality of battery cells and the first end plate and the second end plate;
each of the first end plate and the second end plate comprising:

a main body portion including:

a first surface (11) having a planar shape extending along the stacking direction;
a second surface (12) having a curved shape and disposed to face away from the first surface; and
a first connection surface (15) and a second connection surface (16), each of the first connection surface and the second connection surface disposed to connect the first surface to the second surface and face away from each other; and

a recess portion (121) including a recess space (129) recessed from the second surface toward the plurality of battery cells, the recess portion extending from the first connection surface toward the second connection surface.

9. The battery assembly according to claim 8, wherein the recess portion includes:

a bottom region (1211) arranged in parallel with the first surface in a direction from the first connection surface toward the second connection surface, the bottom region being in contact with the band portion; and

inclined regions (123, 124) inclined toward the bottom region with the bottom region interposed therebetween.

10. The battery assembly according to claim 8 or 9, wherein further comprising a first extension surface (13) and a second extension surface (14) extending from the first surface toward the second surface, and connected to the first surface, the second surface, the first connection surface, and the second connection surface;

wherein the second surface includes: a first protrusion region (125) disposed at an interface between the second surface and the first extension surface; and
a second protrusion region (126) disposed at an interface between the second surface and the second extension surface;
wherein a maximum thickness of thicknesses between the first surface and the second surface is formed in the first protrusion region and the second protrusion region.

11. The battery assembly according to claim 8, wherein
each of the first end plate and the second end plate includes:

a plurality of through-holes penetrating the main body portion in a direction from the first connection surface toward the second connection surface,
wherein the through-holes are arranged in parallel with the first surface at predetermined intervals.

12. The battery assembly according to claim 11, wherein the recess portion includes:

a bottom region (1211) arranged in parallel with the first surface and extending from the first connection surface toward the second connection surface; and
inclined regions (123, 124) inclined toward the bottom region with the bottom region interposed therebetween;
wherein the bottom region is located between two adjacent through-holes among the plurality of through-holes.

13. The battery assembly according to any one of claims 8 to 12, wherein

the end plate satisfies Formula 1 below:

[Formula 1]

$$0 < \frac{|M - MO|}{MO} * 100 \leq 22.5$$

In Formula 1, M is a mass of the end plate including the recess portion forming the recess space, and M0 is a mass of the end plate filled with the same material as the main body portion in the recess space.

14. The battery assembly according to claim 8, wherein the recess portion:

a first recess portion (121a) including a part of the second surface recessed toward the first surface to form a first recess space (129a), and extending in a direction from the first connection surface toward the second connection surface; and
a second recess portion (121b) including another portion of the second surface recessed toward the first surface to form a second recess space (129b), and extending in a direction from the first connection surface toward the second connection surface.

15. The battery assembly according to claim 14, wherein
the band portion includes:

a first band portion in contact with the first recess portion; and
a second band portion disposed adjacent to the first band portion and in contact with the second recess portion.

# FIG. 1

# FIG. 2

1000

210

110(100)

120(100)

300

200

Z

X

# FIG. 3

# FIG. 4

# FIG. 5

# FIG. 6

stiffness reduction amount of end plate (y-axis: 0.0% to 18.0%)

mass reduction amount of end plate (x-axis: 0.0%, 5.6%, 11.2%, 16.8%, 22.5%, 31.5%, 44.5%)

P1, P2, P3

110, 129, L1, L2

0.0% (M0), 22.5%, 44.5%

EP 4 693 650 A2

# FIG. 7

110(100)